# EUROPÄISCHE PATENTSCHRIFT

(11) **EP 0 857 868 B1**
(45) Veröffentlichungstag und Bekanntmachung des Hinweises auf die Patenterteilung: **12.03.2003**
(21) Anmeldenummer: 97121582.7
(22) Anmeldetag: 08.12.1997
(51) Int. Cl.: F02F 1/42

(54) **Diesel-Brennkraftmaschine**
Diesel combustion engine
Moteur à combustion interne au Diesel

(30) Priorität: 10.02.1997 DE 19704965
(43) Veröffentlichungstag der Anmeldung: 12.08.1998
(73) Patentinhaber: AUDI AG, 85045 Ingolstadt (DE)
(72) Erfinder: Bauder, Richard, 74172 Neckarsulm (DE)

(56) Entgegenhaltungen:
- EP-A- 0 634 571
- CH-A- 375 175
- GB-A- 1 259 484
- GARRETT K: "CLEANING UP DIESEL ENGINE EXHAUST EMISSIONS" DESIGN ENGINEERING, 1.September 1990, Seiten 57-58, 62, XP000142541

## Beschreibung

Die vorliegende Erfindung betrifft eine Diesel-Brennkraftmaschine, die nach dem Direkteinspritzverfahren arbeitet. Derartige Brennkraftmaschinen sind in vielfältigen Ausführungsformen bekannt.

Aus der EP 0 634 571 A1 ist eine Diesel-Brennkraftmaschine, die nach dem Direkteinspritzverfahren arbeitet, bekannt. Diese Diesel-Brennkraftmaschine hat mehrere Zylinder. Dabei ist ein Zylinder mit einer Einspritzdüse versehen, welche zur Achse der Zylinderbohrung im Wesentlichen symmetrisch angeordnet ist. Der Zylinder weist ein Einlaßventil und ein Auslaßventil aus, welche bezüglich einer die Bohrung längs halbierenden Ebene im Wesentlichen auf verschiedenen Seiten angeordnet sind. Der Einlaßkanal tritt auf der Seite des Motorblocks und der Auslaßkanal an der anderen Seite des Motorblocks aus.

Es ist Aufgabe der vorliegenden Erfindung, eine verbesserte Diesel-Brennkraftmaschine zu konzipieren, welche die Option bietet, daß sie in fertigungstechnischer Hinsicht ohne großen Aufwand von zwei auf vier Gaswechselventile pro Zylinder aufgestockt werden kann. Zudem soll diese Brennkraftmaschine möglichst leicht sein, geringe Reibungsverluste aufweisen und verbrauchsoptimiert arbeiten.

Gelöst wird diese Aufgabe durch die Merkmale des Patentanspruchs 1.

Die Brennkraftmaschine weist wenigstens drei in Reihe angeordnete Zylinder auf. Durch die im Wesentlichen zentral in der Zylinderbohrung sitzende Einspritzdüse ergeben sich vorteilhafte Ausgangsbedingungen für die Gemischbildung. Zwei Gaswechselventile pro Zylinder sind vorgesehen, welche bezüglich einer die Bohrung jeweils längs halbierenden Ebene im Wesentlichen auf verschiedenen Seiten angeordnet sind. Damit ist eine Anordnung geschaffen, die in einfacher Weise eine Nachrüstung des Zylinderkopfes mit zwei weiteren Gaswechselventilen pro Zylinder erlaubt. Die zwei weiteren Gaswechselventile sind dann ebenfalls auf verschiedenen Seiten der oben genannten Ebene angeordnet.

Die Tellermitten der Gaswechselventile sind auf einer zur Bohrung koaxialen Kreisbahn angeordnet, so daß die zur Verfügung stehende Grundfläche der Bohrung besonders gut genutzt wird. Dabei deckt sich die Projektion dieser Kreisbahn entlang der Achse der Bohrung und der äußere Rand einer zentral im Kolben befindlichen Brennraummulde

In einer ersten Alternative schließen die Verbindungslinien zwischen den Ventiltellermitten der beiden Gaswechselventile und der Achse der Bohrung einen Winkel von ca. 90 Grad ein, wobei die Ventiltellermitten der beiden Gaswechselventile in verschiedenen Abständen zu der Ebene angeordnet sind. Und in einer zweiten Alternative schließen die Verbindungslinien zwischen den Ventiltellermitten der beiden Gaswechselventile und der Achse der Bohrung einen Winkel von ca. 180 Grad ein, wobei die Ventiltellermitten der beiden Gaswechselventile in gleichen Abständen zu der Ebene angeordnet sind.

Die Merkmale dieser beiden Alternativen gewährleisten, daß bei der bereits oben erwähnten Nachrüstung die zusätzlichen Gaswechselventile und Gaswechselkanäle ohne Komplikationen untergebracht werden können.

Die Zylinder der Brennkraftmaschine weisen bevorzugt je einem Hubraum von ca. 0,3 Liter und ein Hub-/Bohrungsverhältnis von ca. 1,3 bis 1,5 auf. Dadurch kann ein sehr kurzer und hoher Motorblock realisiert werden, der kleine Vorbauten erlaubt. Darüber hinaus ist an dieser Dimensionierung des Hubraums und des Hub-/Bohrungsverhältnisses besonders günstig, daß verhältnismäßig geringe Gaskräfte auftreten, so daß der Motorblock aus Leichtmetall gefertigt sein kann. Damit ist ein Motorgewicht von weniger als 100 Kilogramm erreichbar. Aus dem geringen Durchmesser der Bohrungen folgt, daß kleine und damit leichte Kolben und kleine Hauptund Pleuellagerdurchmesser verwendet werden können, welche lediglich geringe Reibungsanteile aufweisen. Somit ist eine Diesel-Brennkraftmaschine realisiert, die ein geringes Gewicht aufweist, eine Reduktion der Reibungsverluste ermöglicht und günstige Verbrauchswerte von ca. 3 Litern pro 100 Kilometern erreichbar macht.

Besonders bevorzugt ist ein Einspritzdruck von über 1000 bar vorgesehen. Denn so können Injektoren mit geringen Durchmessern von nur 14 bis 17 Millimetern eingesetzt werden. Diese Injektoren erlauben kleine Bohrungsdurchmesser, arbeiten mit geringer Leistungsaufnahme und tragen außerdem zu einer Verringerung des Gewichts bei.

Gewichtsersparnisse sind insbesondere bei den bewegten Massen, wie Kolben und Gaswechselventilen notwendig. Daher werden die Kolben wie auch die Gaswechselventile in Leichtbauweise hergestellt.

Weitere Vorteile ergeben sich aus der Reduzierung der in der Brennkraftmaschine auftretenden Reibung. Deshalb erfolgt beim Anmeldegegenstand die Betätigung der Gaswechselventile bevorzugt durch Rollenschlepphebel, welche lediglich geringe Reibungsverluste aufweisen.

Bevorzugt weisen die am Kolben angebrachten Kolbenringe eine maximale Höhe von 3 Millimetern auf und sind auf geringe Tangentialspannungen ausgelegt, was eine Verringerung der Reibung zur Folge hat.

In vorteilhafter Weise kann eine kleine regelbare Ölpumpe vorgesehen sein. Diese Pumpe kann an den jeweiligen Leistungsbedarf der Brennkraftmaschine angepaßt werden und daher die aufgewandte Pumpleistung optimieren.

Zweckmäßig ist eine maximale Drehzahl von ca. 4000 Umdrehungen pro Minute vorgesehen, so daß der Motor ausschließlich im reibungsgünstigen Drehzahlbereich betrieben wird. Darüber hinaus bedingt diese Drehzahl, daß der Kraftstoffverbrauch nicht stark ansteigt. Ferner ist eine sehr niedrige Leerlaufdrehzahl von ca. 600 - 700 Umdrehungen pro Minute vorgesehen.

Ein geringes Kühlwasservolumen wie auch ein geringes Ölvolumen tragen außerdem dazu bei, daß der Motor kein unnützes Gewicht aufweist, sich schnell erwärmt und daß die erforderliche Pumpleistung minimiert wird, was sich günstig auf den Verbrauch auswirkt.

Bevorzugt ist zudem ein Abgasturbolader mit variabler Turbinengeometrie vorgesehen. Dadurch kann der Wirkungsgrad der Diesel-Brennkraftmaschine gesteigert werden und können bei unterschiedlichen Drehzahlbereichen des Motors unterschiedliche Turbinengeometrien bereitgestellt werden. Besonders vorteilhaft ist die Kombination eines Abgasturboladers mit einem möglichst großen und strömungsgünstigen Ladeluftkühler. Dabei ist die Laderauslegung so zu wählen, daß ein möglichst hohes Drehmoment bei niedrigen Drehzahlen dargestellt wird, um lange Getriebe zu ermöglichen.

Darüber hinaus kann auch eine gekühlte Abgasrückführung in vorteilhafter Weise eingesetzt werden.

Die vorliegende Erfindung wird unter Bezugnahme auf die Zeichnungsfiguren näher erläutert. Es zeigen:
- Figur 1: einen Schnitt durch einen Zylinderkopf einer DieselBrennkraftmaschine mit vier verschiedenen Anordnungen der Gaswechselventile, in schematischer und vereinfachter Darstellung; und

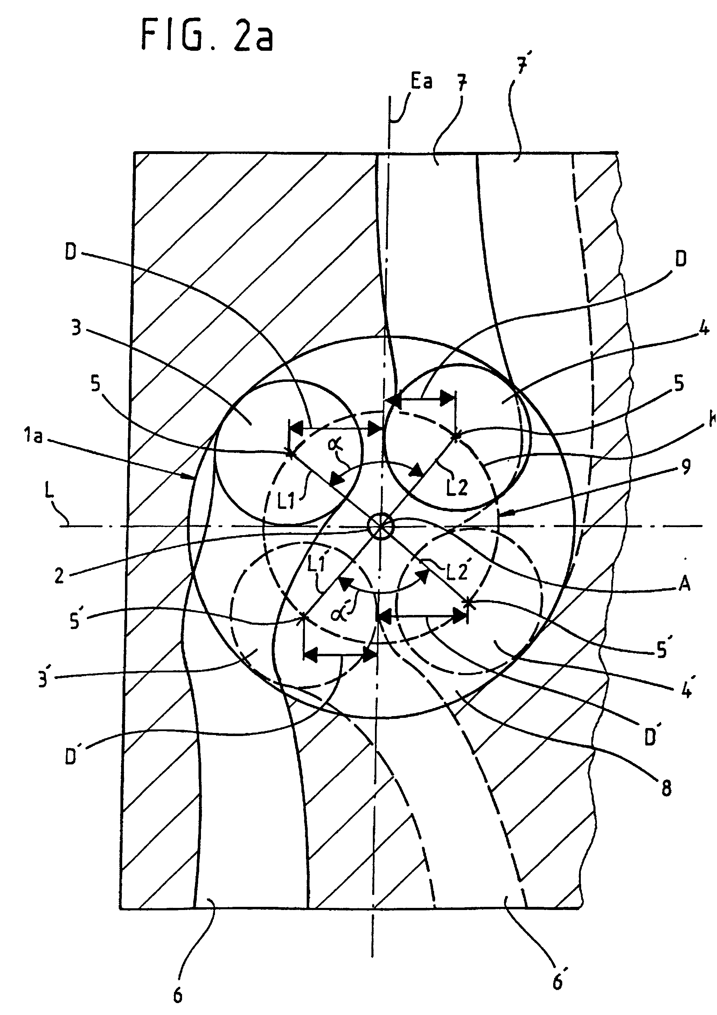

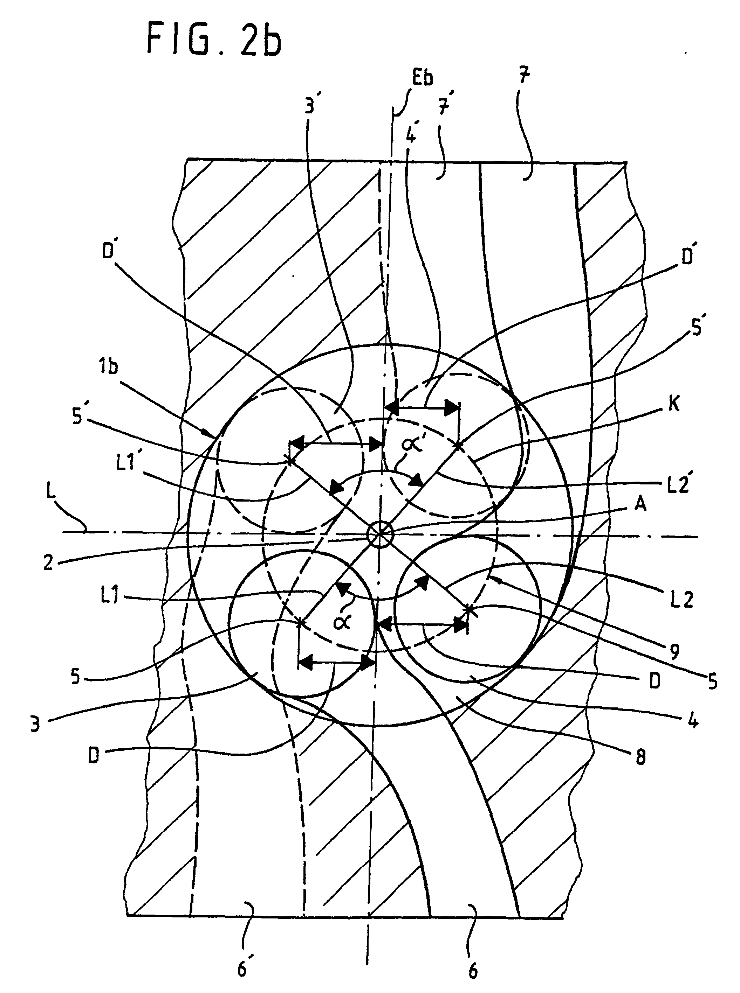

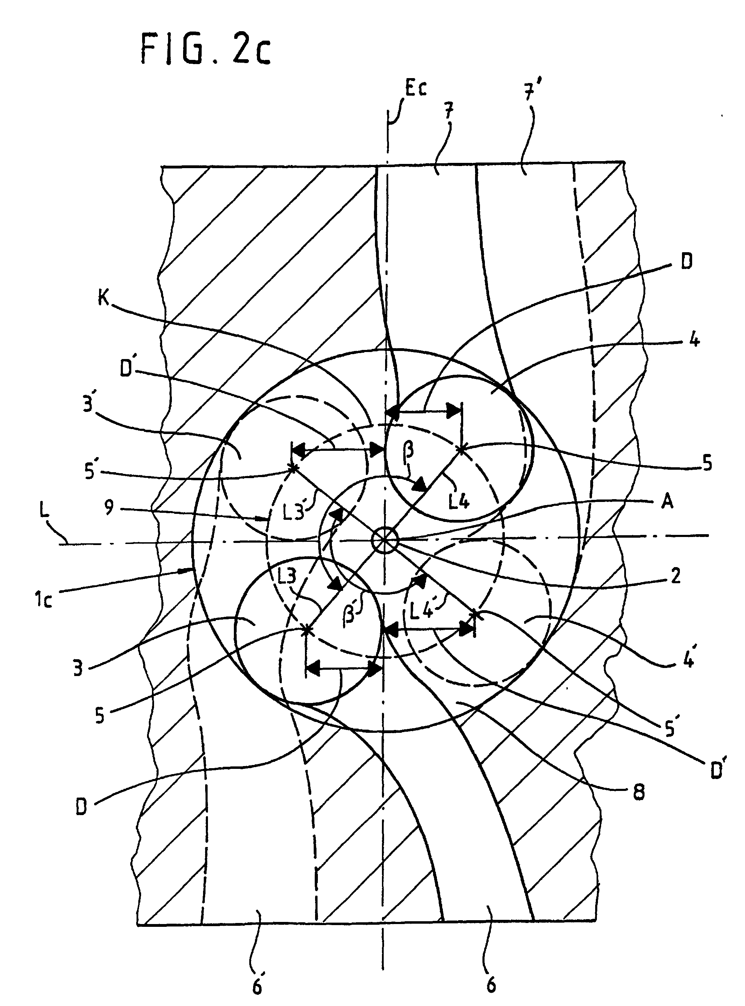

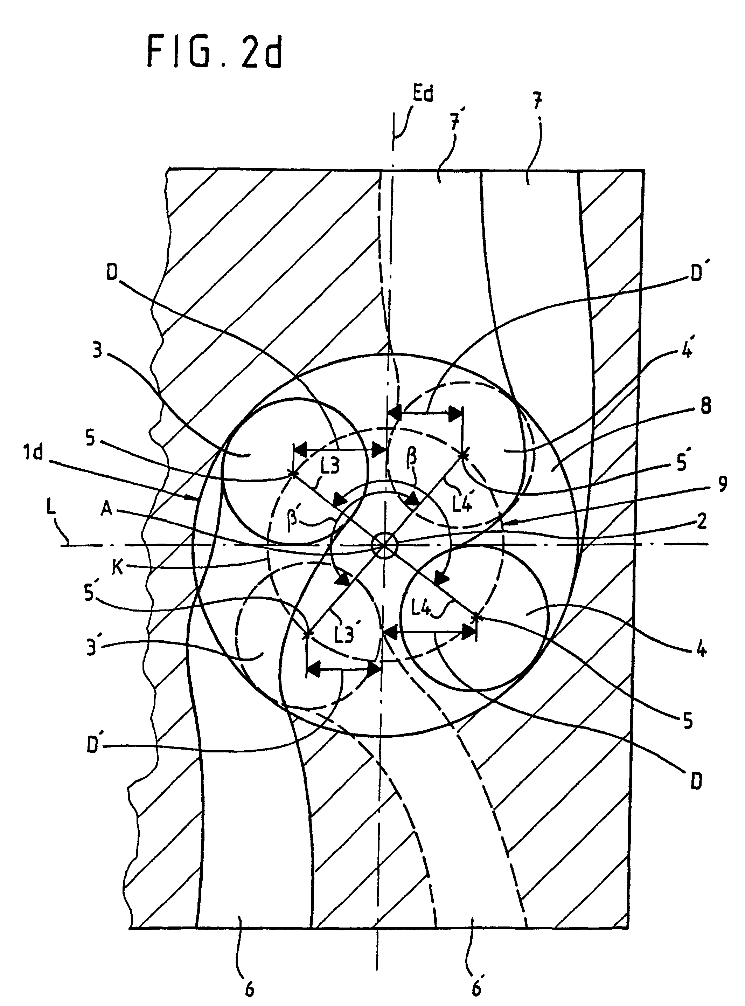

- Figuren 2a bis 2d: jeweils eine Vergrößerung der Zylinder 1a bis 1d aus Figur 1.

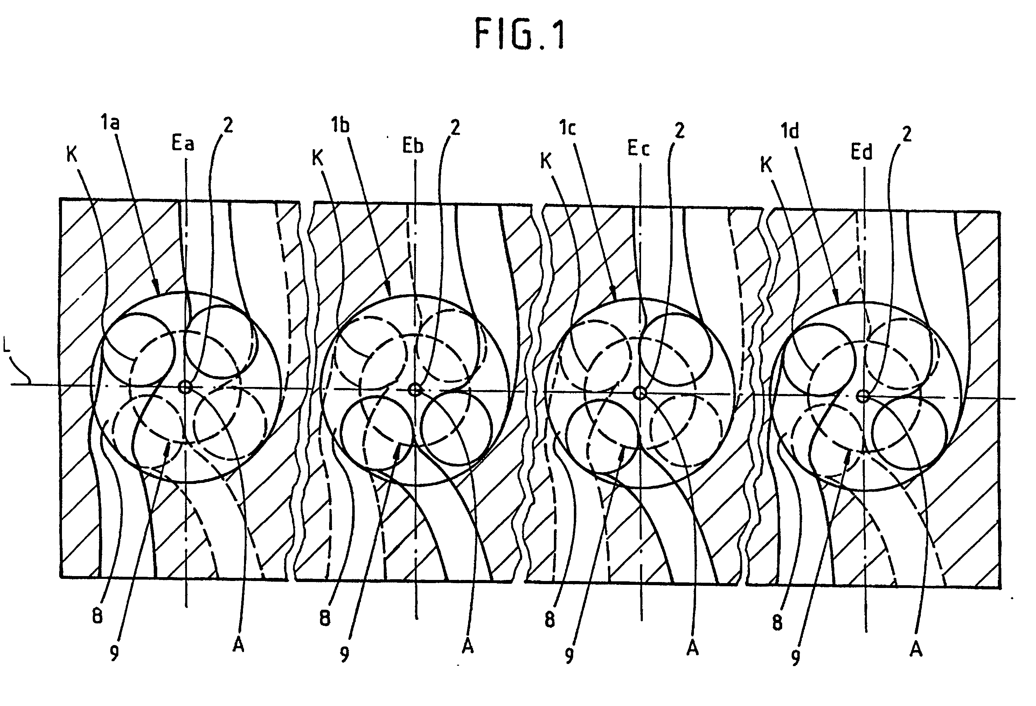

Die in Figur 1 gezeigten Anordnungen der Gaswechselventile, stellen die Möglichkeiten a und b gemäß der ersten Alternative des Patentanspruchs 2 und die Möglichkeiten c und d gemäß der zweiten Alternative des Patentanspruchs 3 dar.

Die Brennkraftmaschine weist vier parallele und in einer Reihe zueinander angeordnete Zylinder 1a, 1b, 1c oder 1d mit einem Hubraum von jeweils ca. 0,3 Litern auf. Dabei hat jeder der Zylinder 1a, 1b, 1c und 1d einen Hub von ca. 85 bis 96 Millimetern und einen Bohrungsdurchmesser von ca. 63 bis 67 Millimetern. Mit diesen Werten lassen sich Hub-/Bohrungsverhältnisse von 1,3 bis 1,5 verwirklichen. Die Verwendung von vier Zylindern 1a, 1b, 1c oder 1d hat dabei den Vorteil, daß für diese Motoren lediglich geringe Schwungmassen vorgesehen werden müssen, um eine gute Laufruhe zu erreichen.

In der Mitte jedes Zylinders 1a, 1b, 1c und 1d ist eine senkrecht stehende, das heißt symmetrisch zur Achse A der Bohrung angeordnete Einspritzdüse 2 vorgesehen.

Jeder der Zylinder 1a, 1b, 1c und 1d sowie jede Einspritzdüse 2 wird durch eine die Bohrung jeweils längs halbierende Ebene Ea, Eb, Ec bzw. Ed geschnitten, wobei die Längsachse L des Motors senkrecht auf der Ebene Ea, Eb, Ec bzw. Ed steht.

Jeweils zwei Gaswechselventile - also ein Einlaßventil 3 und ein Auslaßventil 4 - sind auf verschiedenen Seiten der Ebenen Ea, Eb, Ec oder Ed der Zylinder 1a, 1b, 1c bzw. 1d angeordnet

Gemäß der ersten Alternative der vorliegenden Erfindung sind die Ventiltellermitten 5 der Gaswechselventile in unterschiedlichen Abständen D zu der Ebene Ea bzw. Eb angeordnet. Beim Zylinder 1a weist das Einfaßventil 3 zur Ebene Ea hin einen größeren Abstand D auf als das Auslaßventil 4 und beim Zylinder 1b weist das Einlaßventil 3 zur Ebene Eb hin einen kleineren Abstand D auf als das Auslaßventil 4.

Verbindet man in dem Zylinder 1a oder 1b die Ventiltellermitten 5 des Einlaßventils 3 und des Auslaßventils 4 mit der Achse A der Zylinderbohrung, so schließen die Verbindungslinien L1 und L2 zusammen einen Winkel α von jeweils ca. 90° ein.

Gemäß der zweiten Alternative der vorliegenden Erfindung sind die Ventiltellermitten 5 der Gaswechselventile 3, 4 in etwa gleichen Abständen D zu der Ebene Ec bzw. Ed angeordnet.

Verbindet man nun bei dem Zylinder 1c oder 1d die Ventiltellermitten 5 des Einlaßventils 3 und des Auslaßventils 4 mit der Achse A der Zylinderbohrung, so schließen die Verbindungslinien L3 und L4 zusammen einen Winkel β von jeweils ca. 180° ein.

Außerdem sind bei den Möglichkeiten a, b, c und d die Ventiltellermitten 5 der Gaswechselventile jeweils auf einer Kreisbahn K angeordnet, deren Mittelpunkt auf der Achse A der Bohrung liegt.

An die beiden Gaswechselventile schließt sich je ein Gaswechselkanal an, wobei der Einlaßkanal 6 zur einen Seite des Motorblocks und der Auslaßkanal 7 zur anderen Seite des Motorblocks geführt ist.

Bei dem dargestellten Zylinderkopf der erfindungsgemäßen Diesel-Brennkraftmaschine können pro Zylinder 1a, 1b, 1c oder 1d problemlos noch zwei weitere Gaswechselventile nachgerüstet werden. Diese weiteren Gaswechselventile sind in der Figur durch gestrichene Linien sowie durch Bezugsziffern mit einem Hochstrich angedeutet.

Auch die zwei weiteren Gaswechselventile sind auf verschiedenen Seiten der Ebene Ea, Eb, Ec oder Ed angeordnet.

Nach der ersten Alternative der Erfindung sind die weiteren Gaswechselventile in verschiedenen Abständen D' zu der Ebene Ea oder Eb angeordnet. Wobei beim Zylinder 1a das Einlaßventil 3' einen kleineren Abstand D' zur Ebene Ea aufweist als das Auslaßventil 4' und beim Zylinder 1b das Einlaßventil 3' einen größeren Abstand D' zur Ebene Eb aufweist als das Auslaßventil 4'. Ferner gilt für die weiteren Gaswechselventile, daß die Linien L1', L2', welche die Ventiltellermitten 5' und die Achse A der Bohrung miteinander verbinden, einen Winkel α' von ca. 90 Grad einschließen.

Nach der zweiten Alternative sind die weiteren Gaswechselventile in gleichen Abständen D' zu der Ebene Ec oder Ed angeordnet. Außerdem schließen die Linien L3' und L4', welche die Ventiltellermitten 5' und die Achse A der Bohrung miteinander verbinden, einen Winkel β' von ca. 180 Grad ein.

Darüber hinaus sind die Ventiltellermitten 5' der zwei weiteren Gaswechselventile auf derselben Kreisbahn K um die Achse A der Bohrung angeordnet wie die Ventiltellermitten 5 der zwei ersten Gaswechselventile.

In der dargestellten Ausführungsform deckt sich die Projektion der Kreisbahn K entlang der Achse A der Bohrung ungefähr mit dem äußeren Rand einer in den Kolben 8 eingeformten Brennraummulde 9.

Die zu den weiteren Gaswechselventilen gehörigen weiteren Gaswechselkanäle, das heißt ein Einlaßkanal 6' und ein Auslaßkanal 7' pro Zylinder 1a, 1b, 1c oder 1d, führen wie die zu den ersten Gaswechselventilen gehörigen ersten Gaswechselkanäle teilweise zur einen Seite und teilweise zur anderen Seite des Motorblocks. Dadurch sind alle Einlaßkanäle 6, 6' auf der einen Seite und alle Auslaßkanäle 7, 7' auf der anderen gegenüberliegenden Seite des Motorblocks angeordnet.

## Patentansprüche

1. Diesel-Brennkraftmaschine, die nach dem Direkteinspritzverfahren arbeitet, mit
- mehreren Zylindern,
- einer Einspritzdüse (2) pro Zylinder (1a, 1b, 1c oder 1d), welche zur Achse (A) der Zylinderbohrung im Wesentlichen symmetrisch angeordnet ist,
- zwei Gaswechselventilen pro Zylinder (1a, 1b, 1c oder 1d), wobei das Einlaßventil (3) und das Auslaßventil (4) bezüglich einer die Bohrung jeweils längs halbierenden Ebene (Ea, Eb, Ec bzw. Ed) im Wesentlichen auf verschiedenen Seiten angeordnet sind, und
- die Längsachse des Motors senkrecht auf der längs halbierenden Ebene (Ea, Eb, Ec oder Ed) steht,
- zwei Gaswechselkanälen pro Zylinder (1a, 1b, 1c oder 1d), wobei der Einlaßkanal (6) an der einen Seite des Motorblocks und der Auslaßkanal (7) an der anderen Seite des Motorblocks austritt,
**dadurch gekennzeichnet,**
- **daß** wenigstens drei Zylinder (1a, 1b, 1c oder 1d) in Reihe angeordnet sind,
- **daß** die Ventiltellermitten der Gaswechselventile (5, 5') auf einer zur Zylinderbohrung ungefähr koaxialen Kreisbahn (K) angeordnet sind und
- **daß** sich die Projektion der Kreisbahn (K) entlang der Achse (A) der Zylinderbohrung und der äußere Rand der im Kolben (8) befindlichen Brennraummulde (9) annähernd decken.

2. Diesel-Brennkraftmaschine nach Anspruch 1, **dadurch gekennzeichnet, daß** die Verbindungslinien (L1, L2) zwischen den Ventiltellermitten (5) der beiden Gaswechselventile und der Achse (A) der Bohrung einen Winkel (α) von ca. 90 Grad einschließen, wobei die Ventiltellermitten (5) der beiden Gaswechselventile in verschiedenen Abständen (D) zu der Ebene (Ea oder Eb) angeordnet sind.

3. Diesel-Brennkraftmaschine nach Anspruch 1, **dadurch gekennzeichnet, daß** die Verbindungslinien (L3, L4) zwischen den Ventiltellermitten (5) der beiden Gaswechselventile und der Achse (A) der Bohrung einen Winkel (β) von ca. 180 Grad einschließen, wobei die Ventiltellermitten (5) der beiden Gaswechselventile in gleichen Abständen (D) zu der Ebene (Ec oder Ed) angeordnet sind.

4. Diesel-Brennkraftmaschine nach einem der Ansprüche 1 bis 3, **dadurch gekennzeichnet, daß** pro Zylinder (1a, 1b, 1c oder 1d) zwei weitere Gaswechselventile, das heißt ein Einlaßventil (3') und ein Auslaßventil (4') nachgerüstet sind.

5. Diesel-Brennkraftmaschine nach einem der Ansprüche 1 bis 4, **dadurch gekennzeichnet, daß** drei bis vier in Reihe angeordnete Zylinder (1a, 1b, 1c oder 1d) mit je einem Hubraum von ca. 0,3 Litern und einem Hub/Bohrungsverhältnis von ca. 1,3 bis 1,5 vorgesehen sind.

6. Diesel-Brennkraftmaschine nach einem der Ansprüche 1 bis 5, **dadurch gekennzeichnet, daß** ein Einspritzdruck von über 1000 bar vorgesehen ist.

7. Diesel-Brennkraftmaschine nach einem der Ansprüche 1 bis 6, **dadurch gekennzeichnet, daß** die verwendeten Kolben (8) und Gaswechselventile in Leichtbauweise hergestellt sind.

8. Diesel-Brennkraftmaschine nach einem der Ansprüche 1 bis 7, **dadurch gekennzeichnet, daß** die Betätigung der Gaswechselventile durch Rollenschlepphebel erfolgt.

9. Diesel-Brennkraftmaschine nach einem der Ansprüche 1 bis 8 **dadurch gekennzeichnet, daß** die am Kolben (8) angebrachten Kolbenringe eine Höhe von maximal 3 Millimetern aufweisen.

10. Diesel-Brennkraftmaschine nach einem der Ansprüche 1 bis 9 **dadurch gekennzeichnet, daß** eine kleine regelbare Ölpumpe vorgesehen ist.

11. Diesel-Brennkraftmaschine nach einem der Ansprüche 1 bis 10 **dadurch gekennzeichnet, daß** eine maximale Drehzahl von ca. 4000 Umdrehungen pro Minute vorgesehen ist.

12. Diesel-Brennkraftmaschine nach einem der Ansprüche 1 bis 11 **dadurch gekennzeichnet, daß** eine Leerlaufdrehzahl von ca. 600 Umdrehungen pro Minute vorgesehen ist.

13. Diesel-Brennkraftmaschine nach einem der Ansprüche 1 bis 12 **dadurch gekennzeichnet, daß** ein geringes Kühlwasservolumen wie auch ein geringes Ölvolumen vorgesehen ist.

14. Diesel-Brennkraftmaschine nach einem der Ansprüche 1 bis 13 **dadurch gekennzeichnet, daß** ein Abgasturbolader mit variabler Turbinengeometrie vorgesehen ist.

15. Diesel-Brennkraftmaschine nach einem der Ansprüche 1 bis 14 **dadurch gekennzeichnet, daß** ein großer strömungsgünstig angeordneter Ladeluftkühler vorgesehen ist.

16. Diesel-Brennkraftmaschine nach einem der Ansprüche 1 bis 15 **dadurch gekennzeichnet, daß** eine gekühlte Abgasrückführung vorgesehen ist.

## Claims

1. Diesel combustion engine operating by direct injection and comprising
- multiple cylinders,
- for each cylinder (1a, 1b, 1c or 1d) an injection nozzle (2) which is arranged substantially symmetrical to the axis (A) of the cylinder bore,
- two gas exchange valves per cylinder (1a, 1b, 1c or 1d), the intake valve (3) and the exhaust valve (4) being arranged substantially on different sides relative to a plane (Ea, Eb, Ec or Ed, respectively) which bisects the bore in each case,
- the longitudinal axis of the engine being located vertically along the bisecting plane (Ea, Eb, Ec or Ed), and
- two gas exchange passages per cylinder (1a, 1b, 1c or 1d), the intake passage (6) exiting on one side of the engine block and the exhaust passage (7) on the other side of the engine block,
**characterised in that**
- at least three cylinders (1a, 1b, 1c or 1d) are arranged in line,
- the valve head centres of the gas exchange valves (5, 5') are arranged on a circular path (K) roughly coaxial with the cylinder bore, and
- the projection of the circular path (K) along the axis (A) of the cylinder bore and the external edge of the combustion chamber bowl (9) located in the piston (8) more or less coincide.

2. Diesel combustion engine according to claim 1, **characterised in that** the connecting lines (L1, L2) between the valve head centres (5) of the two gas exchange valves and the axis (A) of the bore enclose an angle (α) of approx. 90 degrees, the valve head centres (5) of the two gas exchange valves being arranged at different distances (D) from the plane (Ea or Eb).

3. Diesel combustion engine according to claim 1, **characterised in that** the connecting lines (L3, L4) between the valve head centres (5) of the two gas exchange valves and the axis (A) of the bore enclose an angle (β) of approx. 180 degrees, the valve head centres (5) of the two gas exchange valves being arranged at identical distances (D) from the plane (Ec or Ed).

4. Diesel combustion engine according to any of claims 1 to 3, **characterised in that** two further gas exchange valves are retrofitted per cylinder (1a, 1b, 1c or 1d), namely an intake valve (3') and an exhaust valve (4').

5. Diesel combustion engine according to any of claims 1 to 4, **characterised in that** three to four in-line cylinders (1a, 1b, 1c or 1d) are each provided with a capacity of approx. 0.3 litre and a stroke-bore ratio of approx. 1.3 to 1.5.

6. Diesel combustion engine according to any of claims 1 to 5, **characterised by** the provision of an injection pressure of over 1000 bar.

7. Diesel combustion engine according to any of claims 1 to 6, **characterised in that** the pistons (8) and gas exchange valves employed are manufactured as lightweight components.

8. Diesel combustion engine according to any of claims 1 to 7, **characterised in that** the gas exchange valves are operated by rolling-type finger followers.

9. Diesel combustion engine according to any of claims 1 to 8, **characterised in that** the piston rings fitted on the piston (8) have a maximum height of 3 millimetres.

10. Diesel combustion engine according to any of claims 1 to 9, **characterised by** the provision of a small variable-level oil pump.

11. Diesel combustion engine according to any of claims 1 to 10, **characterised by** the provision of a maximum speed of approx. 4000 revolutions per minute.

12. Diesel combustion engine according to any of claims 1 to 11, **characterised by** the provision of a maximum idling speed of approx. 600 revolutions per minute.

13. Diesel combustion engine according to any of claims 1 to 12, **characterised by** the provision of both a small cooling water volume and a small oil volume.

14. Diesel combustion engine according to any of claims 1 to 13, **characterised by** the provision of an exhaust gas turbocharger with variable turbine geometry.

15. Diesel combustion engine according to any of claims 1 to 14, **characterised by** the provision of a large charge air cooler arranged for good flow characteristics.

16. Diesel combustion engine according to any of claims 1 to 15, **characterised by** the provision of a cooled exhaust gas recirculation system.

## Revendications

1. Moteur à combustion interne diesel, travaillant selon le procédé d'injection directe, comportant
- une pluralité de cylindres,
- un injecteur (2) par cylindre (1a, 1b, 1c ou 1d) disposé pratiquement symétriquement par rapport à l'axe (A) de l'alésage de cylindre,
- deux soupapes de changement des gaz par cylindre (1a, 1b, 1c ou 1d), la soupape d'admission (3) et la soupape d'échappement (4) étant disposées sensiblement sur des côtés différents par rapport à un plan (Ea, Eb, Ec ou Ed) chaque fois bissecteur du perçage, et
- l'axe longitudinal du moteur étant placé perpendiculairement au plan (Ea, Eb, Ec ou Ed),
- deux canaux de changement des gaz par cylindre (1a, 1b, 1c ou 1d), le canal d'admission (6) sortant sur un côté du bloc moteur et le canal d'échappement (7) sortant sur l'autre côté du bloc moteur,
**caractérisé en ce que**
- au moins trois cylindres (1a, 1b, 1c ou 1d) sont disposés en ligne,
- les centres de disque de soupape de changement des gaz (5, 5') sont disposés sur une trajectoire circulaire (K) à peu près coaxiale par rapport à l'alésage de cylindre,
- **en ce que** la projection de la trajectoire circulaire (K) le long de l'axe (A) de l'alésage de cylindre et le bord extérieur de la cavité de chambre de combustion (9) se trouvant dans le piston (8) se recouvrent à peu près.

2. Moteur à combustion interne diesel selon la revendication 1, **caractérisé en ce que** les lignes de liaison (L1, L2) entre les centres de disque de soupape (5) des deux soupapes de changement des gaz et l'axe (A) de l'alésage font un angle (α) d'environ 90 degrés, les centres de disque de soupape des deux soupapes de changement des gaz étant disposés sous des espacements (D) différents par rapport au plan (Ea ou Eb).

3. Moteur à combustion interne diesel selon la revendication 1, **caractérisé en ce que** les lignes de liaison (L3, L4) entre les centres de disque de soupape (5) des deux soupapes de changement des gaz et l'axe (A) du perçage font un angle (α) d'environ 180 degrés, les centres de disque de soupape (5) des deux soupapes de changement des gaz étant disposés sous des espacements (D) identiques par rapport au plan (Ec ou Ed).

4. Moteur à combustion interne diesel selon l'une des revendications 1 à 3, **caractérisé en ce que** deux autres soupapes de changement des gaz, c'est-à-dire une soupape d'admission (3') et une soupape d'échappement (4'), sont rajoutées par cylindre (1a, 1b, 1c ou 1d).

5. Moteur à combustion interne diesel selon l'une des revendications 1 à 4, **caractérisé en ce que** de trois à quatre cylindres (1a, 1b, 1c ou 1d) disposés en ligne, ayant chacun une cylindré d'environ 0,3 litres et un rapport course/alésage d'environ 1,3 à 1,5, sont prévus.

6. Moteur à combustion interne diesel selon l'une des revendications 1 à 5, **caractérisé en ce qu'**est prévue une pression d'injection supérieure à 1000 bars.

7. Moteur à combustion interne diesel selon l'une des revendications 1 à 6, **caractérisé en ce que** les pistons (8) et les soupapes de changement des gaz utilisées sont fabriqués en construction légère.

8. Moteur à combustion interne diesel selon l'une des revendications 1 à 7, **caractérisé en ce que** l'actionnement des soupapes de changement des gaz se fait par un levier suiveur à galet.

9. Moteur à combustion interne diesel selon l'une des revendications 1 à 8, **caractérisé en ce que** les segments de piston montés sur le piston (8) ont une hauteur maximum de 3 millimètres.

10. Moteur à combustion inteme diesel selon l'une des revendications 1 à 9, **caractérisé en ce que** l'on prévoit une petite pompe à huile réglable.

11. Moteur à combustion interne diesel selon l'une des revendications 1 à 10, **caractérisé en ce que** l'on prévoit une vitesse de rotation maximale d'environ 4000 tours par minute.

12. Moteur à combustion interne diesel selon l'une des revendications 1 à 11, **caractérisé en ce que** l'on prévoit une vitesse de rotation à vide d'environ 600 tours par minute.

13. Moteur à combustion interne diesel selon l'une des revendications 1 à 12, **caractérisé en ce que** l'on prévoit un faible volume d'eau de refroidissement ainsi qu'également un faible volume d'huile.

14. Moteur à combustion interne diesel selon l'une des revendications 11 à 13, **caractérisé en ce que** l'on prévoit un turbocompresseur entraîné par les gaz d'échappement, ayant une géométrie de turbine variable.

15. Moteur à combustion interne diesel selon l'une des revendications 1 à 14, **caractérisé en ce que** l'on prévoit un refroidisseur d'air de suralimentation disposé d'une façon aérodynamiquement avantageuse.

16. Moteur à combustion interne diesel selon l'une des revendications 1 à 15, **caractérisé en ce que** l'on prévoit une re-circulation des gaz d'échappement, accompagnée d'un refroidissement.
